# FASCICULE DE BREVET EUROPEEN

(11) **EP 2 793 063 B1**
(45) Date de publication et mention de la délivrance du brevet: **05.06.2019**
(21) Numéro de dépôt: 14164216.5
(22) Date de dépôt: 10.04.2014
(51) Int. Cl.: G02B 6/38

(54) **Adaptateur avec cage de maintien pour un connecteur multi-contacts et connecteur multi-contacts associé**
Adapter mit Haltekäfig für einen Multikontakt-Steckverbinder und entsprechender Multikontakt-Steckverbinder
Adaptor with retaining cage for a multi-terminal connector and related multi-terminal connector

(30) Priorité: 15.04.2013 FR 1353389
(43) Date de publication de la demande: 22.10.2014
(73) Titulaire: RADIALL, 93300 Aubervilliers (FR)
(72) Inventeur: Mougin, Sylvain, 37110 Le Boulay (FR)
(74) Mandataire: Nony

(56) Documents cités:
- EP-A1- 0 633 485
- EP-A2- 1 205 779
- US-A- 5 563 971
- US-B1- 6 848 834

## Description

La présente invention a pour objet un adaptateur pour connecteur, notamment pour un connecteur multicontacts et un connecteur associé, utilisé notamment dans le domaine aéronautique/militaire et plus généralement en environnement sévère.

Il existe actuellement des connecteurs multi-contacts optiques du type comportant un boîtier logeant un insert, cet insert comportant une pluralité de cavités pour recevoir chacune un élément de contact optique. Un élément de contact optique comporte notamment une pièce désignée usuellement sous le nom de ferrule définissant une face optique et un corps dans lequel est montée la ferrule et portant une fibre optique en regard de la ferrule. Une pièce supplémentaire à fonction d'adaptateur, usuellement désigné sous sa dénomination anglo-saxonne « *sleeve holder* », est fixée sur l'insert, cette pièce comportant une pluralité d'alvéoles s'étendant chacune dans le prolongement d'une cavité de l'insert. Chaque alvéole loge un manchon d'alignement apte à loger deux ferrules afin de permettre l'alignement entre deux éléments de contact optique devant être mis en regard pour établir la connexion par fibre optique.

Ces connecteurs optiques connus peuvent être ceux commercialisés par la société RADIALL sous la dénomination de gamme LuxCis®, notamment les connecteurs de la série EPXA et B. On pourra se reporter avantageusement à la demande de brevet US2006/134990.

Lorsqu'on souhaite réaliser une liaison optique par fibres en monomode, telle qu'une liaison à haut débit, une technique couramment utilisée est la technique dite APC (acronyme anglais de « *Angled Physical contact* »). Cette technique se caractérise notamment par un polissage en biais, typiquement sous un angle de 8°, des extrémités des fibres optiques à raccorder. Si les liaisons optiques obtenues par cette technique APC ont l'avantage d'être plus performantes avec notamment un affaiblissement important des réflexions optiques, elles ont pour inconvénient majeur d'être plus sensibles mais aussi plus sensibles aux contraintes liées aux tolérances de fabrication des pièces et au montage mécanique. Ainsi, un espacement et/ou un désalignement radial et/ou un excentrement trop important(s) peu(ven)t conduire à des pertes de signal non négligeables.

Dans les connecteurs optiques connus mentionnés ci-avant, les manchons d'alignement déjà largement éprouvés (standards) sont constitués par des cylindres creux et fendus sur une génératrice et qui sont réalisés en matériau céramique, matériau intrinsèquement fragile et cassant sous de faibles pressions. En outre, un chanfrein d'entrée d'un manchon d'alignement, c'est-à-dire celui par lequel la ferrule est introduite, ne peut être que de hauteur très limitée. Lorsqu'on souhaite introduire un jeu de fonctionnement radial suffisant pour éliminer les contraintes mécaniques autour de l'ensemble d'une ligne optique, c'est-à-dire deux éléments de contact optique et le manchon d'alignement de ses ferrules qui sont logées dans un connecteur, il y a des risques avérés de casses du manchon, notamment car ce dernier n'est plus protégé mécaniquement. Or, les casses du manchon ont pour conséquence que l'alignement n'est plus effectif. De ce fait, la connexion optique en monomode haut débit n'est pas fonctionnelle.

Aussi, il s'avère nécessaire de réduire au minimum les contraintes, liées aux tolérances de fabrication, sur l'ensemble d'une ligne optique.

Dans un connecteur multi-contacts, la difficulté technique est de supprimer ces contraintes liées aux tolérances de fabrication et de montage pour toutes les lignes optiques, en particulier celles liées au montage de l'adaptateur sur l'insert du connecteur, tout en conservant des manchons d'alignement déjà éprouvés.

La demande de brevet EP0633485 divulgue un ensemble de connexion multi-voies à fibres optiques avec des porte-manchons qui sont encliquetés au niveau de leur partie arrière. Par conséquent, l'ensemble divulgué génère des contraintes mécaniques autour de l'ensemble d'une ligne optique.

Il existe donc un besoin pour améliorer les connecteurs de type optique notamment afin de supprimer les contraintes liées de fabrication et de montage pour toutes les lignes optiques, en particulier celles liées au montage de l'adaptateur sur l'insert du connecteur, tout en conservant des manchons d'alignement déjà éprouvés.

Le but de l'invention est de répondre au moins en partie à ce besoin.

L'invention a ainsi pour objet un adaptateur pour connecteur, notamment pour connecteur multicontacts du type comportant au moins un insert et un boitier à l'intérieur duquel est fixé ledit au moins un insert, l'insert comportant au moins une cavité apte à loger au moins partiellement un élément de contact optique, l'insert présentant une face avant sur laquelle débouche chaque cavité, l'adaptateur comportant au moins une alvéole apte à loger un manchon d'alignement, notamment fendu, l'adaptateur présentant une face avant sur laquelle débouche chaque alvéole, l'adaptateur étant configuré pour être disposé avec sa face avant en appui contre la face avant de l'insert de sorte à avoir chaque manchon d'alignement logé dans une alvéole qui reçoit une ferrule d'un élément de contact optique logé dans une cavité.

Selon l'invention, chaque alvéole est en outre apte à loger une cage de maintien d'un manchon d'alignement, selon un montage flottant radialement à son axe (X), sur toute la longueur du manchon d'alignement

On entend par « montage flottant radial» selon l'invention, un montage défini par un jeu de flottement radial entre la cage et l'alvéole sur toute la longueur du manchon d'alignement. La cage de maintien constitue le logement du manchon d'alignement. La cage est libre de se déplacer radialement au sein de l'alvéole sur une distance donnée qui est définie comme étant le jeu. Ainsi, la cage de maintien flotte radialement dans l'alvéole.

Ainsi, le montage flottant selon l'invention implique un flottement de toute la cage de maintien dans une alvéole avec un jeu de fonctionnement radial à l'axe longitudinal de l'alvéole. Autrement dit, on prévoit selon l'invention qu'aucun point de la cage de maintien, qui peut être réalisé en une pièce monobloc ou en plusieurs pièces, n'est bloqué radialement dans l'alvéole dans laquelle elle est logée, c'est-à-dire est en ajustement serré avec l'alvéole. Autrement dit encore, quelle que soit la configuration de la cage de maintien, on s'assure qu'en tout point de cla cage, le montage flottant laisse subsister un jeu de fonctionnement radial de sorte à conférer un montage mécanique indépendant d'une alvéole d'adaptateur donnée par rapport aux autres alvéoles.

L'adaptateur selon l'invention permet à chaque ligne de contact optique constituée par deux éléments de contact et un manchon d'alignement d'être mécaniquement indépendante des autres. Autrement dit, le montage flottant de chaque cage de maintien dans une alvéole sur toute la longueur du manchon d'alignement permet un montage indépendant des autres cages et donc un montage indépendant des lignes optiques. De tels montages flottants indépendants permettent d'éliminer les contraintes mécaniques sur chacune des lignes optiques.

Grâce à l'invention, il est donc possible de réaliser des connexions optiques en monomode haut débit performantes et en supprimant, à tout le moins, en réduisant les pertes de signal qui étaient selon l'état de l'art fortement dépendantes des contraintes mécaniques sur les lignes optiques.

Selon un mode de réalisation avantageux, l'adaptateur comporte deux pièces assemblées entre elles, de préférence par collage, l'une définissant la face avant, et l'autre la face arrière de l'adaptateur opposée à sa face avant.

Selon un mode de réalisation avantageux, la cage de maintien d'axe longitudinal X1 comporte une portion avant qui est tubulaire et une portion arrière, dans le prolongement de la portion avant, qui est constituée de pattes élastiquement déformables radialement à l'axe X1, les parois externes des portions avant et arrière étant séparées par une nervure centrale de butée apte à venir en butée contre au moins un épaulement interne à une alvéole tandis que les parois internes respectivement de la portion avant et de la portion arrière à l'état non déformé des pattes définissant un logement de maintien du manchon d'alignement.

De préférence, le jeu de fonctionnement radial définissant le montage flottant entre une cage de maintien et une alvéole est égal à la différence de diamètres entre un diamètre interne de l'alvéole et un diamètre externe de la portion avant tubulaire et/ou de la portion arrière à l'état non déformé des pattes.

De préférence encore, le jeu de fonctionnement radial j est compris entre 0,1 et 0,5 mm.

Selon un premier mode de réalisation de maintien de la cage dans une alvéole, les pattes d'une cage de maintien comportent à leur extrémité une collerette apte à être clipsée dans une alvéole en formant une butée coopérant avec la nervure centrale de butée en appui contre un épaulement interne de l'alvéole pour réaliser le maintien longitudinal de la cage dans l'alvéole selon son axe (X).

Selon un deuxième mode de réalisation de maintien de la cage dans une alvéole, la nervure centrale de butée est en appui de part et d'autre sur un épaulement interne de l'alvéole pour réaliser le maintien longitudinal de la cage dans l'alvéole selon son axe (X).

Selon une caractéristique avantageuse, la portion avant comporte une collerette qui épouse la forme de l'alésage d'une alvéole.

Selon une variante de réalisation avantageuse, la cage de maintien comporte au moins deux lèvres de maintien d'un manchon d'alignement dans ladite cage.

Une des deux lèvres, de préférence de forme annulaire, est de préférence agencée à l'intérieur de sa portion avant tubulaire, et l'autre des lèvres est agencée à l'intérieur des pattes élastiquement déformables, ces deux lèvres étant agencées l'une par rapport à l'autre pour maintenir à la fois axialement et radialement à l'axe (X1), un manchon d'alignement introduit dans la cage.

La cage de maintien peut être réalisée en au moins un matériau isolant électriquement notamment une matière plastique. La cage de maintien peut être réalisée en une seule pièce monobloc ou en plusieurs pièces.

De préférence, la ou les alvéoles s'étend (ent) de la face avant à la face arrière de l'adaptateur.

Selon l'invention, on peut utiliser des manchons d'alignement standards, c'est-à-dire des manchons, notamment fendus, en céramique.

Les faces avant et arrière de l'adaptateur peuvent être de forme générale sensiblement rectangulaire ou carrée.

Alternativement, les faces avant et arrière de l'adaptateur sont de forme générale sensiblement en disque.

L'invention a également pour objet une cage de maintien pour un adaptateur qui vient d'être décrit.

L'invention a également pour objet un connecteur, notamment un connecteur multi-contacts comportant:
- au moins un insert comportant au moins une cavité apte à loger au moins partiellement un élément de contact optique, l'insert présentant une face avant sur laquelle débouche chaque cavité,
- un boitier à l'intérieur duquel est fixé ledit au moins un insert,
- au moins un adaptateur tel que décrit précédemment, disposé avec sa face avant en appui contre la face avant de l'insert de sorte à avoir chaque manchon d'alignement logé dans une alvéole qui reçoit une ferrule d'un élément de contact optique logé dans une cavité.

De préférence, l'adaptateur est configuré pour être fixé de manière amovible à l'insert et/ou au boitier.

Le boîtier peut présenter au moins une section transversale rectangulaire ou carrée.

De manière alternative, le boîtier peut présenter au moins une section transversale circulaire.

L'invention a encore pour objet un procédé de réalisation de connexions optiques, à l'aide d'un premier connecteur comportant un premier insert avec des cavités, un deuxième connecteur apte à être accouplé au premier, comportant un deuxième insert avec des cavités, et un adaptateur tel que décrit précédemment, le procédé comportant les étapes suivantes:
- réaliser l'assemblage de l'adaptateur avec ajustement d'un manchon d'alignement dans une cage de maintien et, dans chaque alvéole, montage flottant radial d'une cage radialement à l'axe X, sur toute la longueur du manchon d'alignement,
- monter des éléments de contact optique sur l'un des premier ou deuxième inserts,
- monter des éléments de contact optique sur l'autre premier ou deuxième des inserts,
- accoupler les connecteurs de manière à ce que l'adaptateur soit pris en sandwich entre les inserts, et réaliser des connexions optiques entre les connecteurs.

Les premier et deuxième inserts peuvent être connus en soi.

L'adaptateur d'un connecteur, notamment un connecteur multi-contacts, selon l'invention peut en outre comporter une ou plusieurs alvéoles de logement d'éléments de contact électrique mâles et/ou femelles logés dans les cavités d'un insert. Autrement dit, l'invention s'applique également à un connecteur, notamment un connecteur multi-contacts mixte, c'est-à-dire un ou plusieurs éléments de contact optique avec un ou plusieurs contacts électrique.

L'invention pourra être mieux comprise à la lecture de la description détaillée qui va suivre, d'exemples de mise en oeuvre non limitatifs de l'invention, et à l'examen du dessin annexé, sur lequel:
- la figure 1 représente, schématiquement et partiellement, en perspective, différents éléments d'un premier connecteur multi-contacts selon l'état de l'art,
- la figure 1A représente en coupe longitudinale suivant A-A, les éléments de la figure 1, assemblés,
- la figure 2 est une vue de face suivant II-II, de l'insert du connecteur de la figure 1,
- la figure 3 est une vue de face suivant III-III, de l'insert du connecteur de la figure 1A,
- la figure 4 est une vue, schématique et partielle, en perspective d'un adaptateur selon l'invention,
- la figure 5 est une vue en éclaté des différentes pièces constituant un adaptateur selon un premier mode et selon une première variante de réalisation,
- la figure 5A représente en coupe longitudinale l'adaptateur selon la figure 5, avec les différentes pièces assemblées,
- la figure 5B est une vue schématique en perspective, de la cage de maintien de l'adaptateur selon le premier mode et selon la première variante des figures 5 et 5A,
- la figure 6 est une vue en éclaté des différentes pièces constituant un adaptateur selon le premier mode et selon une deuxième variante de réalisation,
- la figure 6A représente en coupe longitudinale l'adaptateur selon le premier mode de la figure 6, avec les différentes pièces assemblées,
- la figure 6B est une vue schématique en perspective, de la cage de maintien de l'adaptateur selon le premier mode et selon la deuxième variante des figures 6 et 6A,
- la figure 7 est une vue en éclaté des différentes pièces constituant un adaptateur selon un deuxième mode de réalisation,
- la figure 7A représente en coupe longitudinale de l'adaptateur de la figure 7, avec les différentes pièces assemblées,
- la figure 7B est une vue schématique en perspective, de la cage de maintien de l'adaptateur des figures 7 et 7A.

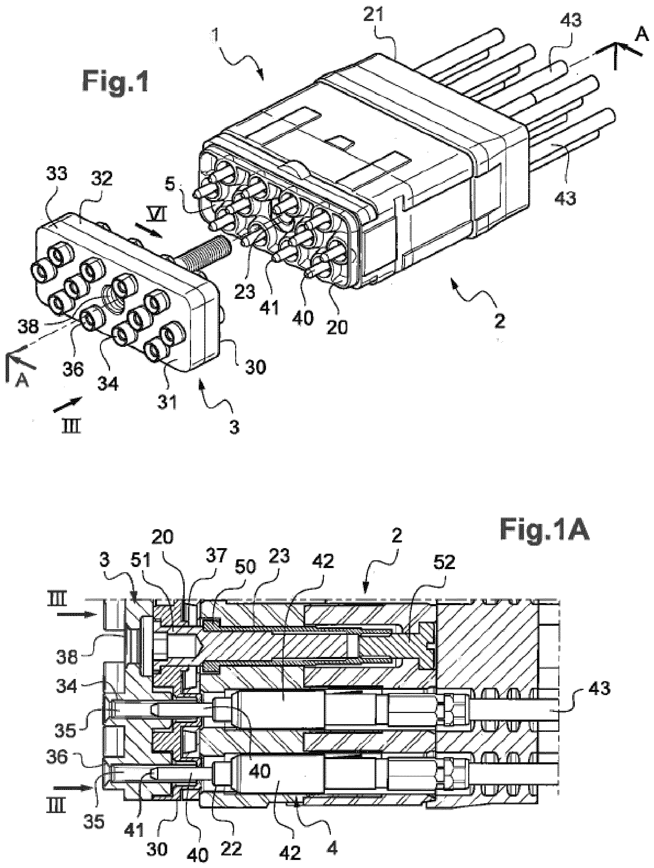

Par souci de clarté, les mêmes références désignant les mêmes éléments d'un connecteur selon l'état de l'art et d'un connecteur selon l'invention sont utilisées pour toutes les figures 1 à 7B.

On a représenté sur les figures 1 à 3, les différents éléments d'un connecteur multi-contacts selon l'état de l'art désigné globalement par la référence 1.

Un tel connecteur 1 comporte principalement un insert 2, un adaptateur 3 et des éléments de contacts optiques 4 logés dans l'insert 2.

L'insert 2 présente une forme sensiblement parallélépipédique, avec des faces avant 20 et arrière 21. L'insert 2 comporte en outre une pluralité de cavités 22 s'étendant parallèlement à son axe longitudinal X, entre les faces arrière 21 et avant 20.

Dans l'exemple considéré, les cavités 22 sont toutes identiques.

Chaque cavité 22 peut recevoir indifféremment un élément de contact optique 4. En variante, il est possible de prévoir sur l'insert 2 au moins deux cavités ayant des formes différentes. Ainsi, bien que non représenté, l'insert 2 peut également être configuré pour qu'au moins deux des cavités 22 reçoivent un élément de contact électrique.

Chaque élément de contact optique 4 comporte une ferrule 40 définissant une face optique 41 et un corps 42 dans lequel est montée la ferrule 40 et portant une fibre optique 43 en regard de la ferrule 40. Le montage de la ferrule 40 dans le corps 42 est réalisé avec un flottement axial.

L'insert 2 comporte en outre un perçage 23 permettant de recevoir des éléments 5 de fixation amovible de l'adaptateur 3 sur l'insert 2.

Ces éléments de fixation 5 comportent par exemple un manchon 50 fileté intérieurement dans lequel peuvent être fixées, à une extrémité, une première vis 51 et, à une extrémité opposée, une deuxième vis 52.

L'insert 2 et les éléments de contact optique 4 peuvent être du type de ceux utilisés dans les connecteurs optiques commercialisés par la société RADIALL sous la dénomination de gamme LuxCis®, notamment les connecteurs de la série EPXA et B.

L'adaptateur 3 présente une première face principale 30 destinée à venir s'appliquer contre la face avant 20 de l'insert 2 et une deuxième face principale 31 opposée à la première 30.

Dans l'exemple considéré, les faces 30 et 31 sont sensiblement planes et présentent une forme sensiblement rectangulaire.

L'adaptateur 3 comporte deux éléments 32 et 33 assemblés entre eux, l'élément 32 définissant la première face 30 et l'élément 33 la deuxième face 31.

Dans l'exemple considéré, les éléments 32 et 33 sont réalisés en un matériau isolant électrique, notamment en une matière plastique.

L'adaptateur 3 comporte une pluralité d'alvéoles 34 dans chacune desquelles est emmanché un manchon d'alignement 35 qui est fendu, lui-même apte à loger une ferrule 40 d'un élément de contact optique 4, comme illustré sur la figure 1A.

Chaque alvéole 34 comporte à chacune de ses extrémités une lèvre de maintien 36 permettant de maintenir le manchon d'alignement fendu 35 dans l'alvéole 34.

Chaque lèvre de maintien 36 est réalisée sur une portion tubulaire faisant saillie sur la première face 30 ou la deuxième face principale 31 de l'adaptateur 3.

Chacune des alvéoles 34 de l'adaptateur 3 est destinée à être disposée dans le prolongement d'une cavité 22 de l'insert 2 pour permettre le logement d'une ferrule 40 dans le manchon d'alignement 35.

Tel qu'illustré, le connecteur multi-contacts selon l'état de l'art comporte un nombre de douze alvéoles 34 réparties suivant trois rangées de quatre alvéoles chacune.

En variante, les alvéoles 34 peuvent être plus ou moins nombreuses, l'adaptateur 3 pouvant comporter par exemple une unique alvéole 34. Le connecteur multicontact 1 est alors réduit à un connecteur mono-contact.

L'adaptateur 3 présente un logement 37 permettant de recevoir la tête de la première vis 51 de fixation amovible de l'adaptateur 3 à l'insert 2. Le logement 37 et donc la tête de la première vis 51 est accessible pour un tournevis par le perçage 38.

Tel qu'illustré, le logement 37 est réalisé à un emplacement central de l'adaptateur 3.

La tête de la première vis 51 peut être mise en place dans le logement 37 au moment de l'assemblage des éléments 32 et 33 de l'adaptateur 3.

L'adaptateur 3 est assemblé avec l'insert 2 en vissant la première vis 51 sur le manchon 50 fileté intérieurement.

Dans un tel connecteur multi-contacts 1 selon l'état de l'art, un élément de contact optique 4 peut être introduit, c'est-à-dire logé, dans une cavité 22 et dans une alvéole 34 de sorte que la ferrule 40 de l'élément de contact optique 4 soit engagée dans le manchon fendu 35, comme illustré sur la figure 1A.

Le connecteur 1 est destiné à être accouplé à un connecteur complémentaire (non représenté) comportant un insert identique à l'insert 2 recevant des éléments de contact optique de type mâles.

Lorsqu'on souhaite réaliser des connexions optiques en mode monomode à haut débit avec les éléments de contacts optiques 4, on utilise la technique dite de polissage APC pour réaliser un polissage en biais des fibres optiques 43 à raccorder.

Cette technique rend plus sensibles les lignes optiques constituées chacune d'un élément de contact optique 4 et d'un manchon d'alignement fendu 35, aux contraintes mécaniques liées aux tolérances de fabrication et de montage des différents éléments.

Comme montré en figures 1 et 1A, les manchons d'alignement 35 standards, i.e. classiquement utilisés, sont constitués chacun d'un cylindre creux fendu en céramique et qui est chanfreiné à ses extrémités. Tels qu'ils sont constitués, et notamment avec leurs fragilité intrinsèque, les manchons d'alignement 35 et un adaptateur 3 avec leurs tolérances de fabrication et de montage selon les figures 1 et 1A, ne permettent pas d'éliminer les contraintes mécaniques sur chaque ligne optique 4, 35 suffisamment sans risque de casse des manchons.

Aussi, afin de supprimer toutes les contraintes mécaniques sur chaque ligne optique 4, 35 dans un connecteur multi-contacts 1, sans risque de casse des manchons, tout en conservant des manchons d'alignement fendus 35 standards, les inventeurs ont pensé à rendre mécaniquement indépendante chaque ligne optique 4, 35 avec un montage flottant radial dans un adaptateur 3.

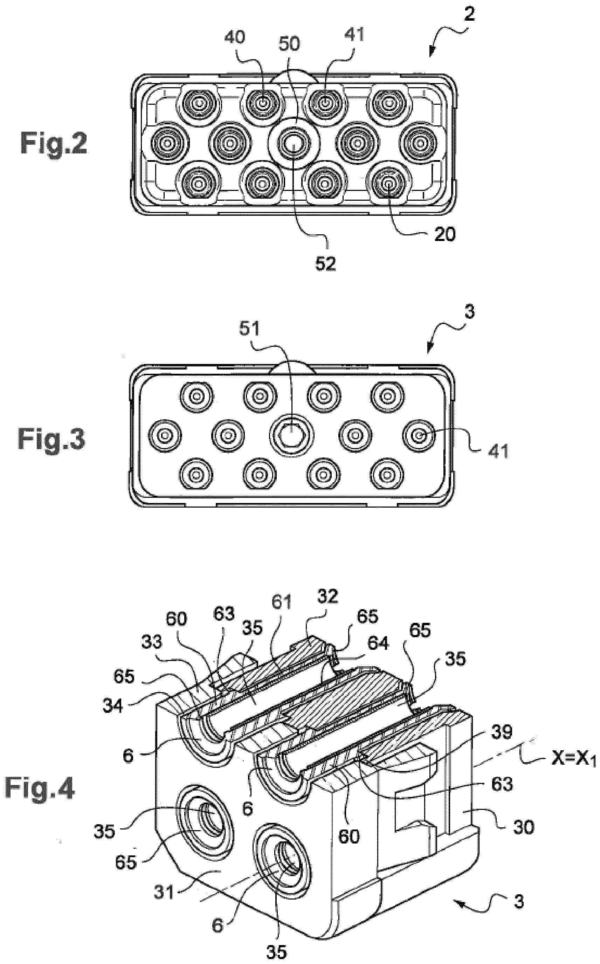

Ainsi, comme illustré en figure 4, selon l'invention il est prévu de loger chaque manchon d'alignement 35 dans une cage de maintien 6 montée flottante radialement à l'axe X d'une alvéole 34 et ce, sur toute la longueur du manchon d'alignement 35. On supprime de ce fait toutes les contraintes mécaniques sur chaque ligne optique 4, 35 et la cage 6 protège mécaniquement chaque manchon d'alignement 35.

Plus précisément, l'adaptateur 3 selon l'invention comporte deux pièces 32, 33 assemblées entre elles et dont l'une 32 définit la face avant 30 d'appui sur la face avant 20 de l'insert 2 de connecteur 1.

Une cage de maintien 6 selon l'invention est de forme générale tubulaire en une seule pièce d'axe longitudinal X1 montée dans chaque alvéole 34 avec un flottement radial à son axe X, chaque alvéole étant définie par les alvéoles respectives des deux pièces 32, 33 mises en regard lors de leur assemblage mutuel.

Une cage de maintien 6 selon l'invention maintient à la fois radialement et axialement à son axe X1, un manchon d'alignement 35.

Dans les modes de réalisation illustrés, une cage de maintien 6 selon l'invention comporte tout d'abord une portion avant 60 qui est une portion tubulaire et une portion arrière 61, dans le prolongement de la portion avant 60, qui est constituée de pattes 62 élastiquement déformables radialement à l'axe X1.

Les parois externes respectivement des portions avant 60 et arrière 61 sont séparées par une nervure centrale de butée 63 apte à venir en butée contre au moins un épaulement interne 39 à une alvéole 34.

Les parois internes respectivement de la portion avant 60 et de la portion arrière 61 à l'état non déformé des pattes définissent un logement 64 de maintien du manchon d'alignement 35.

Lorsque la cage de maintien 6 est montée dans une alvéole 34 de l'adaptateur avec en son sein un manchon d'alignement 35 et avant introduction d'une ferrule 40 de contact optique 4, les axes longitudinaux X et X1 sont confondus.

Le jeu de fonctionnement radial définissant le montage flottant entre une cage de maintien 6 et une alvéole 34 sur toute la longueur du manchon d'alignement 35 est égal à la différence de diamètres entre un diamètre interne de l'alvéole 34 de l'adaptateur 3 et un diamètre externe de la portion avant tubulaire 60 et/ou de la portion arrière 61 à l'état non déformé des pattes 62. De préférence, le jeu de fonctionnement radial j est compris entre 0,2 et 0,3 mm.

De préférence, la cage de maintien 6 comporte au moins deux lèvres de maintien 65 d'un manchon d'alignement 35 dans ladite cage.

Une de ses lèvres 65, de préférence de forme annulaire, est agencée à l'intérieur de sa portion avant tubulaire 60, et dont l'autre est agencée à l'intérieur des pattes 62 élastiquement déformables, ces deux lèvres 65 étant agencées l'une par rapport à l'autre pour maintenir à la fois axialement et radialement à l'axe X1, un manchon d'alignement 35 introduit dans la cage 6.

Ainsi, on insère un manchon d'alignement 35 par la portion arrière 62 en écartant les pattes 62 jusqu'à mise en butée longitudinale contre la lèvre de maintien 65 de la portion avant tubulaire 60, l'élasticité des pattes 62 venant alors les resserrer contre le manchon 35 en réalisant l'autre butée longitudinale par l'autre lèvre de maintien 65.

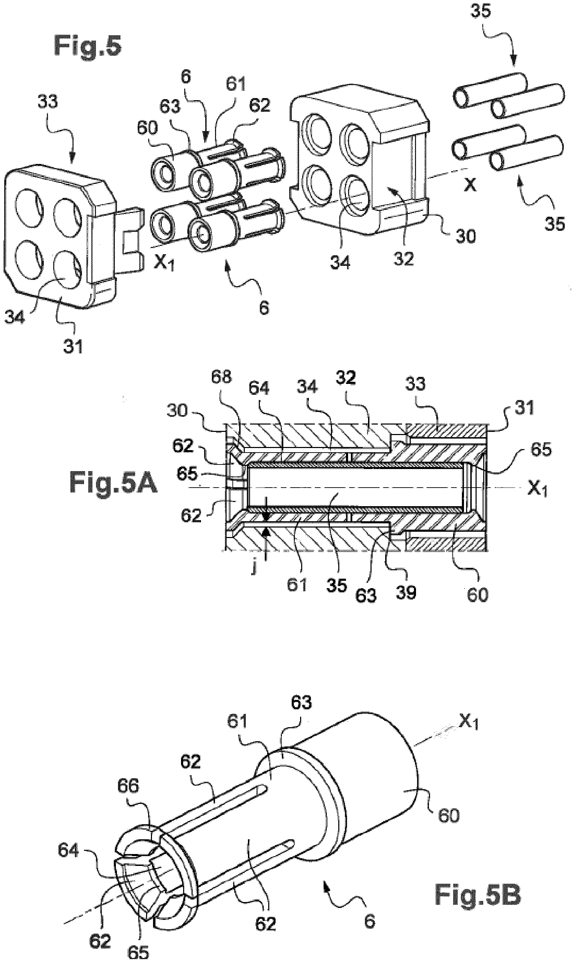

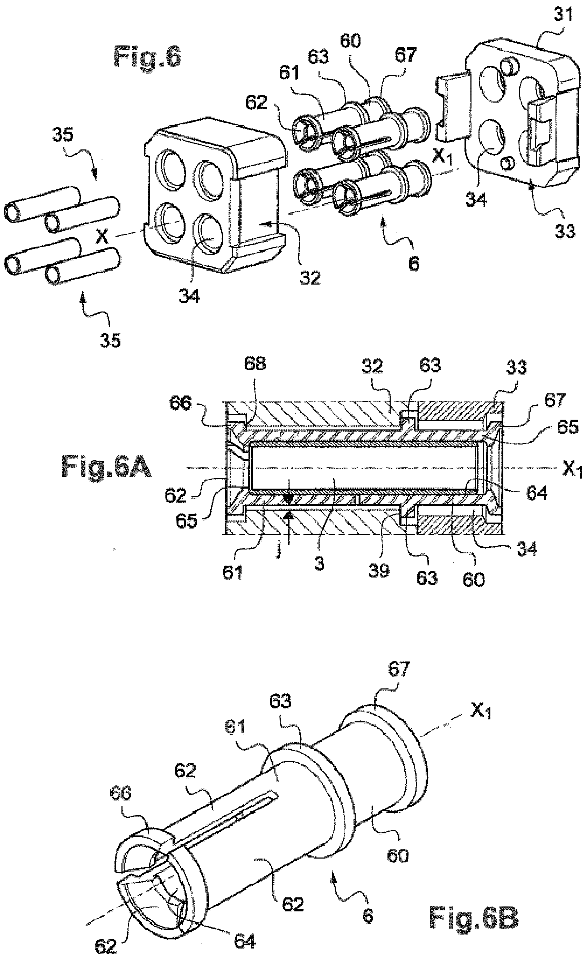

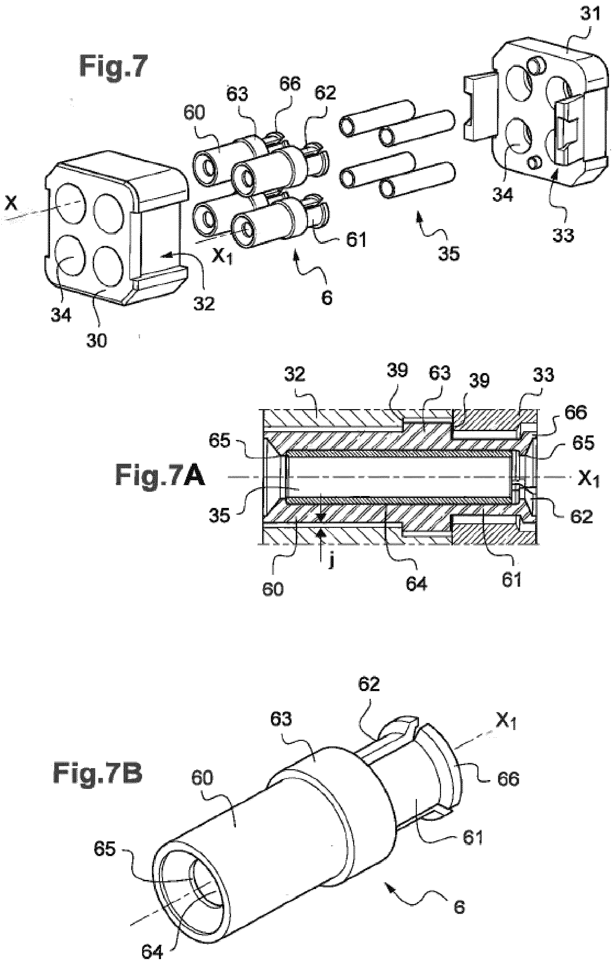

Les pattes élastiques 62 de la portion arrière peuvent avoir une extrémité en forme de collerette 66 dont la fonction est selon le mode de réalisation décrit ci-après soit seulement d'épouser la forme de l'alésage d'alvéole 34 (figure 7A), soit à la fois d'épouser la forme de l'alésage d'alvéole 34 et de se clipser à l'intérieur de cette forme d'alésage en constituant une butée d'extrémité 68 qui coopère avec la nervure centrale de butée 63 pour réaliser le maintien longitudinal du manchon d'alignement 35 (figures 5A et 6A).

La portion tubulaire avant 60 peut être réalisée avec une extrémité également en forme de collerette 67 dont la fonction est d'épouser la forme de l'alésage d'alvéole 34 (figure 6A).

En fonction notamment du matériau constitutif des cages de maintien 6, de leurs procédés de fabrication et des process de montage, on peut envisager différents modes et variantes de réalisation de ladite cage 6 et de son maintien longitudinal dans une alvéole 34 d'adaptateur selon son axe X.

Ainsi, selon un premier mode de réalisation illustré aux figures 5, 5A et 5B d'une part et aux figures 6, 6A et 6B, les pattes 62 servent par l'intermédiaire de leur collerette 66 de butée longitudinale 68 pour le maintien longitudinal de la cage 6 dans une alvéole 34.

Selon ce premier mode, cette butée 68 coopère avec la nervure centrale de butée 63 en appui contre un épaulement interne 39 d'une alvéole 34 pour réaliser le maintien longitudinal de la cage 6, c'est-à-dire son blocage mécanique dans l'alvéole 34 selon son axe X.

Selon un deuxième mode de réalisation, distinct du premier, illustré aux figures 7 à 7B, le maintien longitudinal de la cage 6 dans l'alvéole 34 est réalisé uniquement par la nervure centrale de butée 63 en appui de part et d'autre sur un épaulement interne 39 de l'alvéole 34.

Autrement dit, dans ce deuxième mode, la nervure centrale de butée 63 est bloquée longitudinalement dans un sens par un épaulement interne 39 réalisé dans une pièce 32 de l'adaptateur 3 et dans l'autre sens par un autre épaulement interne 39 réalisé par l'interface entre les deux pièces 32, 33 assemblées entre elles (figure 7A).

Selon une première variante du premier mode, illustrée aux figures 5 à 5B, il est prévu un nombre de pattes élastiques identiques 62 égal à quatre et une portion avant tubulaire 60 sans collerette.

Dans cette première variante, le jeu de fonctionnement radial j qui définit le montage flottant radial selon l'invention sur toute la longueur du manchon d'alignement 35 est égal à la différence de diamètre entre le diamètre interne de l'alvéole 34 de la pièce 32 et le diamètre extérieur de la portion arrière 61 constituée des pattes 62 (figure 5A).

Dans cette première variante, le diamètre externe de la portion avant 60 est supérieur à celui de la portion arrière 61.

Pour procéder à l'assemblage des différentes pièces constituant l'adaptateur de connecteur 1 tel qu'illustré aux figures 5 à 5B, on procède de la manière suivante :
- clipsage de chaque cage de maintien 6 dans la portion d'alvéole 34 de la pièce 32,
- insertion avec ajustement de chaque manchon 35 dans une cage 6 clipsée jusqu'à son maintien longitudinal par les lèvres de maintien 65,
- assemblage par collage entre pièces 32 et 33 en logeant chaque portion tubulaire 60 dans la portion d'alvéole 34 de la pièce 33.

Selon une deuxième variante du premier mode, illustrée aux figures 6 à 6B, il est prévu un nombre de pattes élastiques identiques 62 égal à trois et une portion avant tubulaire 60 avec collerette 67.

Dans cette deuxième variante, tout comme dans la première variante, le jeu de fonctionnement radial j qui définit le montage flottant radial selon l'invention sur toute la longueur du manchon d'alignement 35 est égal à la différence de diamètre entre le diamètre interne de l'alvéole 34 de la pièce 32 et le diamètre extérieur de la portion arrière 61 constituée des pattes 62 (figure 6A).

Dans cette deuxième variante, le diamètre externe de la portion avant 60 est égal à celui de la portion arrière 61.

Pour procéder à l'assemblage des différentes pièces constituant l'adaptateur de connecteur 1 tel qu'illustré aux figures 6 à 6B, on procède de la même manière que pour l'assemblage des figures 5 à 5B qui vient d'être décrit.

Selon une variante du deuxième mode, illustrée aux figures 7 à 7B, il est prévu un nombre de pattes élastiques identiques 62 égal à trois et une portion avant tubulaire 60 sans collerette.

Dans cette variante du deuxième mode, le jeu de fonctionnement radial j qui définit le montage flottant radial selon l'invention est égal à la différence de diamètre entre le diamètre interne de l'alvéole 34 de la pièce 32 et le diamètre extérieur de la portion avant tubulaire (figure 7A).

Dans cette variante du deuxième mode, le diamètre externe de la portion avant 60 est supérieur à celui de la portion arrière 61.

Pour procéder à l'assemblage des différentes pièces constituant l'adaptateur de connecteur 1 tel qu'illustré aux figures 7 à 7B, on procède de la manière suivante :
- insertion avec ajustement de chaque manchon d'alignement 35 dans une cage 6 jusqu'à son maintien longitudinal par les lèvres de maintien 65,
- logement de chaque cage de maintien 6 dans la portion d'alvéole 34 de la pièce 32,
- assemblage par collage entre pièces 32 et 33 en logeant chaque portion arrière 61 dans la portion d'alvéole 34 de la pièce 33.

Bien entendu, l'invention n'est pas limitée aux exemples de mise en oeuvre qui viennent d'être décrits.

En particulier, bien que le connecteur 1 représenté loge uniquement des éléments de contact optique dans l'insert 2, l'invention s'applique à un connecteur 1 qui loge également un ou plusieurs éléments de contact électrique mâles et/ou femelles dans l'insert 2.

Par ailleurs, si la cage de maintien 6 selon l'invention représentée est en une seule pièce monobloc, on peut prévoir de la réaliser en plusieurs pièces, le montage flottant radial étant alors réalisé pour chacune de ces pièces dans l'alvéole.

## Revendications

1. Adaptateur (3) pour connecteur (1), notamment pour connecteur multicontacts, du type comportant au moins un insert (2) d'axe longitudinal (X) et un boitier (6) à l'intérieur duquel est fixé ledit au moins un insert (2), l'insert comportant au moins une cavité (22) s'étendant parallèlement à l'axe longitudinal (X) et apte à loger au moins partiellement un élément de contact optique (4), l'insert (2) présentant une face avant (20) sur laquelle débouche chaque cavité (22), l'adaptateur comportant au moins une alvéole (34) apte à loger un manchon d'alignement (35), notamment fendu, l'adaptateur comprenant également ce manchon d'alignement (35), l'adaptateur (3) présentant une face avant (30) sur laquelle débouche chaque alvéole (34), l'adaptateur étant configuré pour être disposé avec sa face avant (30) en appui contre la face avant (20) de l'insert (2) de sorte à avoir chaque manchon d'alignement (35) logé dans une alvéole (34) qui reçoit une ferrule (40) d'un élément de contact optique (4) logé dans une cavité (22),
**caractérisé par le fait qu'**il comporte en outre une cage de maintien (6) d'un manchon d'alignement (35), apte à être logée dans chaque alvéole (34) selon un montage flottant radialement à l'axe longitudinal (X) sur toute la longueur du manchon d'alignement.

2. Adaptateur selon la revendication 1, **caractérisé par le fait qu'**il comporte deux pièces (32; 33) assemblées entre elles, de préférence par collage, l'une définissant la face avant (30), et l'autre la face arrière (31) de l'adaptateur opposée à sa face avant (30).

3. Adaptateur selon la revendication 1 ou 2, **caractérisé par le fait que** la cage de maintien (6) d'axe longitudinal (X1) comporte une portion avant (60) qui est tubulaire et une portion arrière (61), dans le prolongement de la portion avant (60), qui est constituée de pattes (62) élastiquement déformables radialement à l'axe longitudinal (X1), les parois externes des portions avant (60) et arrière (61) étant séparées par une nervure centrale de butée (63) apte à venir en butée contre au moins un épaulement interne (39) à une alvéole (34) tandis que les parois internes respectivement de la portion avant (60) et de la portion arrière (61) à l'état non déformé des pattes définissant un logement (64) de maintien du manchon d'alignement (35).

4. Adaptateur selon la revendication 3, **caractérisé par le fait que** le jeu de fonctionnement radial définissant le montage flottant entre une cage de maintien (6) et une alvéole (34) est égal à la différence de diamètres entre un diamètre interne de l'alvéole (34) et un diamètre externe de la portion avant tubulaire (60) et/ou de la portion arrière (61) à l'état non déformé des pattes (62).

5. Adaptateur selon la revendication 4, **caractérisé par le fait que** le jeu de fonctionnement radial j est compris entre 0,1 et 0,5mm.

6. Adaptateur selon l'une des revendications 3 à 5, **caractérisé par le fait que** les pattes (62) d'une cage de maintien (6) comportent à leur extrémité une collerette (66) apte à être clipsée dans une alvéole (34) en formant une butée (68) coopérant avec la nervure centrale de butée (63) en appui contre un épaulement interne (39) de l'alvéole (34) pour réaliser le maintien longitudinal de la cage (6) dans l'alvéole (34) selon l'axe longitudinal (X).

7. Adaptateur selon l'une des revendications 3 à 5, **caractérisé par le fait que** la nervure centrale de butée (63) est en appui de part et d'autre sur un épaulement interne (39) de l'alvéole (34) pour réaliser le maintien longitudinal de la cage (6) dans l'alvéole (34) selon l'axe longitudinal (X).

8. Adaptateur selon l'une des revendications 3 à 5, **caractérisé par le fait que** la portion avant (60) comporte une collerette (67) qui épouse la forme de l'alésage d'une alvéole (34).

9. Adaptateur selon l'une quelconque des revendications précédentes, **caractérisé par le fait que** la cage de maintien (6) comporte au moins deux lèvres de maintien (65) d'un manchon d'alignement (35) dans ladite cage.

10. Adaptateur selon la revendication 9 en combinaison avec l'une quelconque des revendications 2 à 8, **caractérisé par le fait qu'**une des deux lèvres (65), de préférence de forme annulaire, est agencée à l'intérieur de sa portion avant tubulaire (60), et l'autre des lèvres (65) est agencée à l'intérieur des pattes (62) élastiquement déformables, ces deux lèvres (65) étant agencées l'une par rapport à l'autre pour maintenir à la fois axialement et radialement à l'axe longitudinal (X1), un manchon d'alignement (35) introduit dans la cage (6).

11. Adaptateur selon l'une des revendications précédentes, **caractérisé par le fait que** la ou les alvéoles (34) s'étend (ent) de la face avant (30) à la face arrière (31) de l'adaptateur.

12. Adaptateur selon l'une quelconque des revendications précédentes, **caractérisé par le fait que** le ou les manchons d'alignement (35), notamment fendu(s), est (sont) en céramique.

13. Connecteur (1), notamment un connecteur multicontacts comportant:
- au moins un insert (2) comportant au moins une cavité (22) apte à loger au moins partiellement un élément de contact optique (4), l'insert (2) présentant une face avant (20) sur laquelle débouche chaque cavité (22),
- un boîtier à l'intérieur duquel est fixé ledit au moins un insert (2),
- au moins un adaptateur (3) selon l'une quelconque des revendications précédentes, disposé avec sa face avant (30) en appui contre la face avant (20) de l'insert (2) de sorte à avoir chaque manchon d'alignement (35) logé dans une alvéole (34) qui reçoit une ferrule (40) d'un élément de contact optique (4) logé dans une cavité (22).

14. Connecteur selon la revendication 13, **caractérisé par le fait que** l'adaptateur est configuré pour être fixé de manière amovible à l'insert (2) et/ou au boitier.

15. Procédé de réalisation des connexions optiques, à l'aide d'un premier connecteur (1) comportant un premier insert (2) d'axe longitudinal (X) avec des cavités (22) s'étendant parallèlement à l'axe longitudinal (X), un deuxième connecteur apte à être accouplé au premier, comportant un deuxième insert avec des cavités, et un adaptateur selon l'une quelconque des revendications 1 à 12, le procédé comportant les étapes suivantes:
- réaliser l'assemblage de l'adaptateur (3) avec ajustement d'un manchon d'alignement (35) dans une cage de maintien (6) et, dans chaque alvéole (34), montage flottant d'une cage (6) radialement à l'axe longitudinal (X), sur toute la longueur du manchon d'alignement,
- monter des éléments de contact optique sur l'un des premier ou deuxième inserts,
- monter des éléments de contact optique sur l'autre premier ou deuxième des inserts,
- accoupler les connecteurs de manière à ce que l'adaptateur soit pris en sandwich entre les inserts, et réaliser des connexions optiques entre les connecteurs.

## Patentansprüche

1. Adapter (3) für einen Steckverbinder (1), insbesondere für einen Multikontakt-Steckverbinder, des Typs, welcher wenigstens einen Einsatz (2) mit einer Längsachse (X) und ein Gehäuse (6), in dessen Innerem der wenigstens eine Einsatz (2) befestigt ist, aufweist, wobei der Einsatz wenigstens einen Hohlraum (22) aufweist, der sich parallel zur Längsachse (X) erstreckt und geeignet ist, ein optisches Kontaktelement (4) wenigstens teilweise aufzunehmen, wobei der Einsatz (2) eine Vorderseite (20) aufweist, auf welcher jeder Hohlraum (22) mündet, wobei der Adapter wenigstens eine Buchse (34) aufweist, die geeignet ist, eine Ausrichtungshülse (35) aufzunehmen, insbesondere eine geschlitzte Ausrichtungshülse, wobei der Adapter außerdem diese Ausrichtungshülse (35) umfasst, wobei der Adapter (3) eine Vorderseite (30) aufweist, auf welcher jede Buchse (34) mündet, wobei der Adapter dafür ausgelegt ist, mit seiner Vorderseite (30) an der Vorderseite (20) des Einsatzes (2) anliegend angeordnet zu werden, derart, dass jede Ausrichtungshülse (35) in einer Buchse (34) aufgenommen wird, welche eine Ferrule (40) eines optischen Kontaktelements (4) aufnimmt, das in einem Hohlraum (22) aufgenommen ist, **dadurch gekennzeichnet, dass** er außerdem einen Haltekäfig (6) für eine Ausrichtungshülse (35) aufweist, der geeignet ist, in jeder Buchse (34) mittels einer radial bezüglich der Längsachse (X) schwimmenden Lagerung auf der gesamten Länge der Ausrichtungshülse aufgenommen zu werden.

2. Adapter nach Anspruch 1, **dadurch gekennzeichnet, dass** er zwei Teile (32; 33) aufweist, die vorzugsweise durch Kleben miteinander verbunden sind, wobei das eine die Vorderseite (30) und das andere die Rückseite (31) des Adapters, die seiner Vorderseite (30) gegenüberliegt, definiert.

3. Adapter nach Anspruch 1 oder 2, **dadurch gekennzeichnet, dass** der Haltekäfig (6) mit einer Längsachse (X1) einen vorderen Abschnitt (60), welcher rohrförmig ist, und einen hinteren Abschnitt (61) in der Verlängerung des vorderen Abschnitts (60), welcher aus radial zur Längsachse (X1) elastisch verformbaren Klauen (62) besteht, aufweist, wobei die Außenwände des vorderen (60) und hinteren (61) Abschnitts durch eine zentrale Anschlagrippe (63) getrennt sind, die geeignet ist, an wenigstens einer inneren Schulter (39) in einer Buchse (34) zur Anlage zu kommen, während die Innenwände des vorderen Abschnitts (60) bzw. des hinteren Abschnitts (61) im nicht verformten Zustand der Klauen eine Aufnahme (64) zum Halten der Ausrichtungshülse (35) definieren.

4. Adapter nach Anspruch 3, **dadurch gekennzeichnet, dass** das radiale Betriebsspiel, das die schwimmende Lagerung zwischen einem Haltekäfig (6) und einer Buchse (34) definiert, gleich der Durchmesserdifferenz zwischen einem Innendurchmesser der Buchse (34) und einem Außendurchmesser des vorderen rohrförmigen Abschnitts (60) und/oder des hinteren Abschnitts (61) im nicht verformten Zustand der Klauen (62) ist.

5. Adapter nach Anspruch 4, **dadurch gekennzeichnet, dass** das radiale Betriebsspiel j zwischen 0,1 und 0,5 mm liegt.

6. Adapter nach einem der Ansprüche 3 bis 5, **dadurch gekennzeichnet, dass** die Klauen (62) eines Haltekäfigs (6) an ihrem Ende einen Kragen (66) aufweisen, der geeignet ist, in eine Buchse (34) eingeklipst zu werden und dabei einen Anschlag (68) zu bilden, der mit der zentralen Anschlagrippe (63) zusammenwirkt, die an einer inneren Schulter (39) der Buchse (34) anliegt, um das Halten des Käfigs (6) in der Buchse (34) in Längsrichtung entlang der Längsachse (X) zu bewirken.

7. Adapter nach einem der Ansprüche 3 bis 5, **dadurch gekennzeichnet, dass** die zentrale Anschlagrippe (63) auf beiden Seiten an einer inneren Schulter (39) der Buchse (34) anliegt, um das Halten des Käfigs (6) in der Buchse (34) in Längsrichtung entlang der Längsachse (X) zu bewirken.

8. Adapter nach einem der Ansprüche 3 bis 5, **dadurch gekennzeichnet, dass** der vordere Abschnitt (60) einen Kragen (67) aufweist, welcher an die Form der Bohrung einer Buchse (34) angepasst ist.

9. Adapter nach einem der vorhergehenden Ansprüche, **dadurch gekennzeichnet, dass** der Haltekäfig (6) wenigstens zwei Lippen (65) zum Halten einer Ausrichtungshülse (35) in dem Käfig aufweist.

10. Adapter nach Anspruch 9 in Kombination mit einem der Ansprüche 2 bis 8, **dadurch gekennzeichnet, dass** eine der zwei Lippen (65), die vorzugsweise ringförmig ist, im Inneren seines rohrförmigen vorderen Abschnitts (60) angeordnet ist und die andere der Lippen (65) im Inneren der elastisch verformbaren Klauen (62) angeordnet ist, wobei diese zwei Lippen (65) relativ zueinander so angeordnet sind, dass sie eine in dem Käfig (6) eingeführte Ausrichtungshülse (35) gleichzeitig axial und radial zur Längsachse (X1) halten.

11. Adapter nach einem der vorhergehenden Ansprüche, **dadurch gekennzeichnet, dass** sich die Buchse oder die Buchsen (34) von der Vorderseite (30) bis zur Hinterseite (31) des Adapters erstreckt (erstrecken) .

12. Adapter nach einem der vorhergehenden Ansprüche, **dadurch gekennzeichnet, dass** die Ausrichtungshülse oder die Ausrichtungshülsen (35), die insbesondere geschlitzt ist (sind), aus Keramik besteht (bestehen).

13. Steckverbinder (1), insbesondere Multikontakt-Steckverbinder, welcher aufweist:
- wenigstens einen Einsatz (2), der wenigstens einen Hohlraum (22) aufweist, der geeignet ist, ein optisches Kontaktelement (4) wenigstens teilweise aufzunehmen, wobei der Einsatz (2) eine Vorderseite (20) aufweist, auf welcher jeder Hohlraum (22) mündet,
- ein Gehäuse, in dessen Innerem der wenigstens eine Einsatz (2) befestigt ist,
- wenigstens einen Adapter (3) nach einem der vorhergehenden Ansprüche, der mit seiner Vorderseite (30) an der Vorderseite (20) des Einsatzes (2) anliegend angeordnet ist, derart, dass jede Ausrichtungshülse (35) in einer Buchse (34) aufgenommen wird, welche eine Ferrule (40) eines optischen Kontaktelements (4) aufnimmt, das in einem Hohlraum (22) aufgenommen ist.

14. Steckverbinder nach Anspruch 13, **dadurch gekennzeichnet, dass** der Adapter dafür ausgelegt ist, lösbar am Einsatz (2) und/oder am Gehäuse befestigt zu werden.

15. Verfahren zur Herstellung optischer Verbindungen mithilfe eines ersten Steckverbinders (1), der einen ersten Einsatz (2) mit einer Längsachse (X) und mit Hohlräumen (22), die sich parallel zur Längsachse (X) erstrecken, einen zweiten Steckverbinder, der geeignet ist, mit dem ersten gekoppelt zu werden, und einen zweiten Einsatz mit Hohlräumen aufweist, und einen Adapter nach einem der Ansprüche 1 bis 12 aufweist, wobei das Verfahren die folgenden Schritte umfasst:
- Ausführen des Zusammenbaus des Adapters (3) mit Einstellung einer Ausrichtungshülse (35) in einem Haltekäfig (6) und, in jeder Buchse (34), schwimmende Lagerung eines Käfigs (6) radial bezüglich der Längsachse (X) auf der gesamten Länge der Ausrichtungshülse,
- Anbringen optischer Kontaktelemente an einem vom ersten und zweiten Einsatz,
- Anbringen optischer Kontaktelemente am anderen vom ersten und zweiten Einsatz,
- Koppeln der Steckverbinder, derart, dass der Adapter sandwichartig zwischen den Einsätzen angeordnet ist, und Herstellen der optischen Verbindungen zwischen den Steckverbindern.

## Claims

1. Adaptor (3) for a connector (1), notably for a multicontact connector, of the type comprising at least one insert (2) of longitudinal axis (X) and a housing (6) inside which said at least one insert (2) is fixed, the insert comprising at least one cavity (22) extending parallel to the longitudinal axis (X) and suitable for at least partially housing an optical contact element (4), the insert (2) having a front face (20) on which each cavity (22) emerges, the adaptor comprising at least one cell (34) suitable for housing an alignment sleeve (35), notably slotted, the adaptor also comprising this alignment sleeve (35), the adaptor (3) having a front face (30) on which each cell (34) emerges, the adaptor being configured to be arranged with its front face (30) bearing against the front face (20) of the insert (2) so as to receive each alignment sleeve (35) housed in a cell (34) which receives a ferrule (40) of an optical contact element (4) housed in a cavity (22),
**characterized in that** it also comprises a securing cage (6) for an alignment sleeve (35), suitable to be housed in each cell (34) by a mounting that is floating radially to the longitudinal axis (X) over the entire length of the alignment sleeve.

2. Adaptor according to Claim 1, **characterized in that** it comprises two parts (32; 33) assembled together, preferably by gluing, one defining the front face (30), and the other defining the rear face (31) of the adaptor opposite its front face (30).

3. Adaptor according to Claim 1 or 2, **characterized in that** the securing cage (6) of longitudinal axis (X1) comprises a front portion (60) which is tubular and a rear portion (61), in the extension of the front portion (60), which consists of tabs (62) that may be elastically deformed radially to the axis (X1), the outer walls of the front (60) and rear (61) portions being separated by a central abutment rib (63) designed to abut against at least one internal shoulder (39) of a cell (34) whereas the internal walls respectively of the front portion (60) and of the rear portion (61) in the non-deformed state of the tabs define a securing housing (64) for the alignment sleeve (35).

4. Adaptor according to Claim 3, **characterized in that** the radial operating play defining the floating mounting between a securing cage (6) and a cell (34) is equal to the difference in diameters between an internal diameter of the cell (34) and an external diameter of the tubular front portion (60) and/or of the rear portion (61) in the non-deformed state of the tabs (62).

5. Adaptor according to Claim 4, **characterized in that** the radial operating play j is between 0.1 and 0.5 mm.

6. Adaptor according to one of Claims 3 to 5, **characterized in that** the tabs (62) of a securing cage (6) comprise at their end, a collar (66) which may be clipped into a cell (34) by forming an abutment (68) cooperating with the central abutment rib (63) bearing against an internal shoulder (39) of the cell (34) to produce the longitudinal securing of the cage (6) in the cell (34) along the longitudinal axis (X).

7. Adaptor according to one of Claims 3 to 5, **characterized in that** the central abutment rib (63) bears on either side on an internal shoulder (39) of the cell (34) to produce the longitudinal securing of the cage (6) in the cell (34) along the longitudinal axis (X).

8. Adaptor according to one of Claims 3 to 5, **characterized in that** the front portion (60) comprises a collar (67) which closely follows the form of the bore of a cell (34).

9. Adaptor according to any one of the preceding claims, **characterized in that** the securing cage (6) comprises at least two securing lips (65) for securing an alignment sleeve (35) in said cage.

10. Adaptor according to Claim 9 in combination with any one of Claims 2 to 8, **characterized in that** one of the two lips (65), preferably of annular form, is arranged inside its tubular front portion (60), and the other of the lips (65) is arranged inside the elastically deformable tabs (62), these two lips (65) being arranged relative to one another to secure, both axially and radially to the longitudinal axis (X1), an alignment sleeve (35) introduced into the cage (6).

11. Adaptor according to one of the preceding claims, **characterized in that** the cell or cells (34) extends (extend) from the front face (30) to the rear face (31) of the adaptor.

12. Adaptor according to any one of the preceding claims, **characterized in that** the alignment sleeve or sleeves (35), notably slotted, is (are) made of ceramic.

13. Connector (1), notably a multicontact connector, comprising:
- at least one insert (2) comprising at least one cavity (22) suitable for at least partially housing an optical contact element (4), the insert (2) having a front face (20) on which each cavity (22) emerges,
- a housing inside which said at least one insert (2) is fixed,
- at least one adaptor (3) according to any one of the preceding claims, arranged with its front face (30) bearing against the front face (20) of the insert (2) so as to have each alignment sleeve (35) housed in a cell (34) which receives a ferrule (40) of an optical contact element (4) housed in a cavity (22).

14. Connector according to Claim 13, **characterized in that** the adaptor is configured to be removably fixed to the insert (2) and/or to the housing.

15. Method for producing optical connections, using a first connector (1) comprising a first insert (2) of longitudinal axis (X) with cavities (22) extending parallel to the longitudinal axis (X), a second connector designed to be coupled to the first, comprising a second insert with cavities, and an adaptor according to any one of Claims 1 to 12, the method comprising the following steps:
- assembling the adaptor (3) with the fitting of an alignment sleeve (35) in a securing cage (6) and, in each cell (34), the floating mounting of a cage (6) radially to the longitudinal axis X, over the entire length of the alignment sleeve,
- mounting optical contact elements on one of the first or second inserts,
- mounting optical contact elements on the other of the first or second inserts,
- coupling the connectors so that the adaptor is sandwiched between the inserts, and making optical connections between the connectors.
